Europäisches Patentamt

(19) European Patent Office

Office européen des brevets

(11) Publication number: **0 147 449**
**B1**

(12) **EUROPEAN PATENT SPECIFICATION**

(45) Date of publication of patent specification: **02.03.88**

(51) Int. Cl.⁴: **H 04 N 9/097**

(21) Application number: **84902462.5**

(22) Date of filing: **13.06.84**

(86) International application number:
**PCT/GB84/00202**

(87) International publication number:
**WO 85/00083 03.01.85 Gazette 85/01**

(54) **IMPROVEMENTS IN OR RELATING TO OPTICAL BEAM SPLITTERS.**

(30) Priority: **16.06.83 GB 8316402**

(43) Date of publication of application:
**10.07.85 Bulletin 85/28**

(45) Publication of the grant of the patent:
**02.03.88 Bulletin 88/09**

(84) Designated Contracting States:
**DE FR GB**

(56) References cited:
**FR-A-2 026 114**
**US-A-3 293 357**
**US-A-3 718 751**

(73) Proprietor: **KODAK LIMITED**
**P.O. Box 66 Station Road**
**Hemel Hempstead Herts, HP1 1JU (GB)**
(84) **GB**

(73) Proprietor: **EASTMAN KODAK COMPANY**
**343 State Street**
**Rochester New York 14650 (US)**
(84) **DE FR**

(72) Inventor: **WATT, Peter, Bernard**
**6 Dewars Close Welwyn**
**Hertfordshire AL6 9RR (GB)**
Inventor: **SHARMAN, Richard, Arthur**
**25 Roslyn Way**
**Houghton Regis Dunstable, Bedfordshire (GB)**

(74) Representative: **Davis, Ian Ellison et al**
**Kodak Limited Patent Department Headstone Drive**
**Harrow Middlesex HA1 4TY (GB)**

Courier Press, Leamington Spa, England.

EP 0 147 449 B1

# Description

In image analysing devices, it is conventional to scan, point to point, an original with a spot of light and to analyse the modulated light transmitted by or reflected from the original to determine its spectral content and brightness. The analysis is generally effected by splitting the modulated light into three colours, for example red, green and blue and to measure the amount of light of each of the colours by means of respective photoresponsive devices. The scanning can be effected by means of a raster on the face plate of a cathode ray tube which is imaged onto the original. Alternatively, the point of light may be caused to move across the original respectively in one direction whilst the original is moved (at a slower rate) orthogonally in its own plane.

The modulated and split light is collected and directed onto the respective photoresponsive devices and signals therefrom are representative of the colour content of the original on a point to point basis. Such signals can be stored and/or used indirectly or directly in a reproductive process.

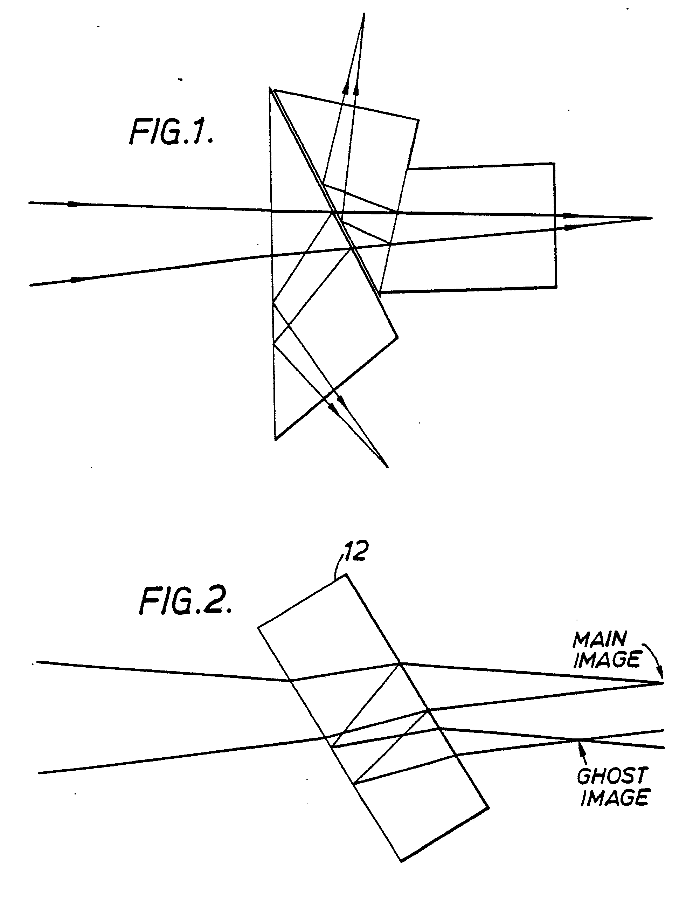

The beam splitting may be effected by semi-reflective mirrors which may be dichroic and/or which may be followed by colour filters so that each photoresponsive device receives only light of one of the three colours. A conventional beam splitter is in the form shown in Fig. 1 of the accompanying drawings and comprises three prisms two of which have dichroic filters coated on one of their faces. Such a beam splitter is costly and has inherent disadvantages but is of the kind normally used when two dimensional scanning of an original is effected such as in a television camera.

United States specification No. 2 792 740 describes a more basic form of beam splitter but explains that problems arise using inclined dichroic or semi transparent mirrors as the beam splitting elements. These problems are: "ghost images" due to interreflections between the surface of each of the mirror supports, transverse chromatic aberration, coma and astigmatism.

Linear charge coupled devices (CCDs) have now been developed. The individual cells of the array are small enough to give a pixel size providing acceptable resolution. An illuminated line of an original to be scanned is imaged on the array. Three such arrays, with an appropriate beam splitter are used. The original is preferably moved so that successive lines thereof are imaged on the arrays. A linear CCD array may typically be 10 to 15 mm long and contain 1000 cells in the linear array. Each pixel is then 1 thousandth of the width of the original in the direction of the line of illumination. For example, the light received by each cell of the CCD, for acceptable definition, derives from an area of the original no greater than 0.25 mm (and preferably of the order of 0.025 mm) length in the direction of the line of illumination.

Unfortunately, the amount of light received by each cell (the integral of light against time) is very small and the lens, imaging the line of light on the array, to provide a sufficient quantity of illumination, must therefore work at an aperture of, for example, f4 or greater. The greater the aperture of the lens, the greater is the tendency for optical aberrations and other optical faults to arise. When using linear CCD arrays, as described above, faults such as astigmatism and ghost images which would be present using the arrangement described in U.S. 2 792 740 would be totally unacceptable. The arrangement described in that specification will overcome the problem of coma and transverse chromatic aberration and normalises astigmatism for all three channels. Astigmatism may also be overcome totally but in a way that creates ghost images transverse to the line of illumination. The problems of ghost images and/or astigmatism therefore remain.

The present invention seeks to overcome the aforesaid disadvantages in a simple yet inexpensive manner whilst fully utilising the advantages afforded by the newly developed linear charge coupled device arrays.

US—A—3293357 shows an optical beam splitter for use in analysing the image content of an original by splitting light transmitted through or reflected from the original into three colours by means of dichroic mirrors mounted on transparent support media.

The present invention provides an optical beam splitter for use in analysing the image content of an original by splitting light transmitted through or reflected from the original into three colours by means of dichroic mirrors mounted on transparent support media, wherein each transparent support medium induces transverse chromatic aberration and coma in the rays of light transmitted thereby, characterized in that the beam splitter includes at least one further transparent plate, such that light transmitted by the beam splitter to respective linear charge coupled device arrays has induced therein either (1) no coma and transverse chromatic aberration contributions, or (2) one or more coma and transverse chromatic aberration contributions of one polarity having respective total magnitudes and one or more coma and transverse chromatic aberration contributions of opposite polarity having the same respective total magnitudes.

Where each transparent support medium also induces astigmatism in the rays of light transmitted thereby, the beam splitter preferably further includes a respective terminal astigmatism correcting lens in each transmitted light path, before the respective CCD array, for focussing a fully corrected line of light thereonto.

Preferably, there are two dichroic mirrors, the mirrors being inclined at equal and opposite angles to the axis of the system, and one further transparent plate, light of a first colour being reflected from one dichroic mirror and light of second and third colours being transmitted thereby, light of the second colour being reflected by the other dichroic mirror and transmitted by the further transparent plate, and light of the third colour being transmitted by said other dichroic mirror such that light of the first colour is not transmitted and has zero coma, transverse chromatic aberration or astigmatism induced therein, light of the second colour has two equal and opposite amounts of coma and transverse chromatic aberration induced therein in its passage through the transparent support medium of said one dichroic mirror and through the transparent plate, and light of the third colour has two equal and opposite amounts of coma and transverse chromatic aberration induced therein on passage through the transparent support media of both of said dichroic mirrors.

Each terminal astigmatism correcting lens may be in the form of a plano-convex cylindrical lens having its axis parallel to the length of the respective linear array of CCDs.

The transparent support media and the transparent plate may be arranged to be sufficiently thick that ghost images caused by internal reflection are imaged at a location remote from the sensitive surface of the charge coupled devices.

Infrared light, inherently produced by most light sources, is not absorbed to any great extent by photographic dyes. It is necessary to ensure that that CCD array which would normally receive infrared light (the "red" array) does not do so. This is ensured by providing an infrared reflecting surface, for example, on the transparent plate.

With such a beam splitter, transverse chromatic aberration, coma, astigmatism and ghost images are avoided even though the optical paths may include lenses working at apertures of f4 or larger and the resolution of the image is within the commercially acceptable range utilising presently available arrays of charge coupled devices.

The invention will be described further, by way of example, with reference to the accompanying drawings, in which:

Fig. 2 illustrates a transparent support medium of thickness sufficient adequately to separate desired light from an unwanted first order ghost image of such light; and

Fig. 3 is a diagrammatic representation of an optical beam splitter in accordance with the present invention.

The optical beam splitter in accordance with the present invention is useful in an image analysing apparatus instead of the relatively expensive beam splitter shown in Fig. 1.

An image analysing device incorporating the present invention comprises means (not shown) for holding an original such as a photographic negative to be analysed, means (not shown) for illuminating the original, slit means for passing light transmitted by a narrow width line of the original, and mechanical means (such as original moving means) for causing the slip to pass light transmitted by successive line portions of the original, the device including optical means for focussing an image of the narrow width line of the original onto the CCD arrays, and wherein the optical means has a working aperture of f4 or greater.

Light modulated by transmission through the original is ultimately focussed onto linear arrays of charge coupled devices (CCDs) responsive respectively to light of a particular colour. The beam splitter of the present invention is interposed in between the original and the linear CCD arrays.

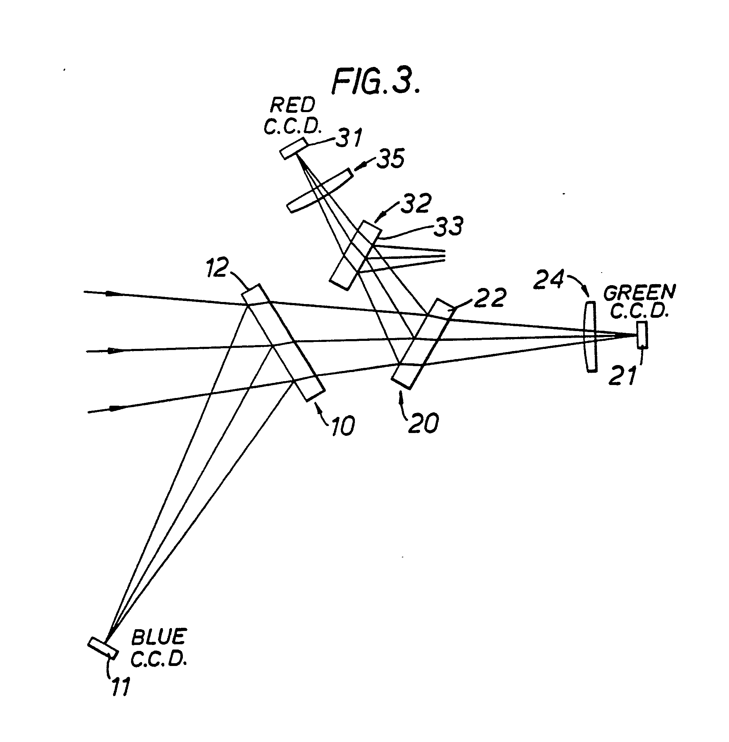

As shown in Fig. 3 of the drawings, the beam splitter according to the invention comprises a first dichroic mirror 10 having a dichroic coating on the front surface of a transparent supporting medium 12 which coating reflects blue light to a first linear CCD array 11 extending at right angles to the plane of the drawing. The image modulated light is focussed onto the array. The CCD array 11 is sensitive to blue light and may have an appropriate correcting filter (not shown) in the path thereto after the dichroic mirror 10 to overcome spectral deficiencies of the dichroic coating. Red and green image modulated light impinging on the dichroic surface of the mirror 10 is transmitted thereby and passes through the transparent supporting medium 12. In so doing, transverse chromatic aberration, coma and astigmatism are induced in the image rays.

Transmission through the medium 12 gives rise to at least a discernable first order ghost image due to internal reflections (see Fig. 2). The medium 12 is made sufficiently thick that the first and subsequent order ghost images are displaced sufficiently from the optical path so as to be imaged parallel to but displaced from the respective linear CCD array.

The transmitted red and green light then impinge on the surface of a second dichroic mirror 20 having a dichroic coating on its surface which reflects red light and transmits green light which passes through the transparent support medium 22. Coma, astigmatism and transverse chromatic aberration are induced in the transmitted green light but because the transparent supporting medium 22 is of the same material and thickness as but oppositely inclined to the medium 12, the transverse chromatic aberration and coma induced are equal and opposite to those induced on the transmission through the medium 12 and are therefore corrected. Astigmatism due to light transmission through both the media 12 and 22 is additive and the image, in one plane, would not be in focus at the same distance from the medium 22 as the image in the plane at right angles thereto. A terminal astigmatism correcting lens 24 in the form of a plano-convex cylindrical lens of axis parallel to the length of the array is therefore interposed between the medium 22 and the CCD array 21 so that a fully corrected accurately focussed image of the line of green light from the original impinges on the CCD array 21. Any ghost images produced by internal reflection in the medium 22 are focussed as a line parallel to but displaced from the linear CCD array 21. As in the case of the "Blue" CCD array, appropriate correcting filters may be interposed between the medium 22 and the CCD array 21.

The image modulated red light is reflected from the surface of the dichroic mirror 20 and, as this red light has only passed through the plate 12, an oppositely inclined transparent plate 32 is located such that the reflected red light passes therethrough. In this way, equal and opposite transverse chromatic abberation and coma are induced to that induced by the medium 12. Thus coma and transverse chromatic aberration are corrected. However, further astigmatism is induced on transmission through the plate 32 and an astigmatism correcting lens 35 (similar to the lens 24) is located so that the red light passing through the plate 32 is fully corrected and can be accurately focussed onto the sensitive surface of a "red" CCD array 31. Similarly any ghost images caused by the plate 32 are focussed as line images parallel to but displaced from the array 31.

Infrared light (which is not absorbed by photographic dyes and hence is unmodulated by the image on the original) is normally reflected by the surface of the dichroic mirror 20 and would normally fall upon the "red" CCD array 31. CCDs are sensitive to infrared radiation. The transparent plate 32 has a dichroic coating on the surface 33 thereof which reflects infrared radiation but transmits image modulated red light.

It will be appreciated that medium 12 and the medium 22 and the medium 12 and the plate 32 are of thickness and refractive index such that each induces an equal and opposite amount of coma and transverse chromatic aberration for all rays passing through each pair. The support media and the plate are preferably of glass and are each of such thickness (see Fig. 2) that adequate separation takes place between desired and first and subsequent order ghost images generated by internal reflection. Lenses used in the system can work at apertures of f4 and greater. In this way, linear CCD arrays can be used for image analysis without any optical degradation which would cause incorrect signals and consequent loss of image quality in any reproduction.

## Claims

1. An optical beam splitter for use in analysing the image content of an original by splitting light transmitted through or reflected from the original into three colours by means of dichroic mirrors (10, 20) mounted on transparent support media (12, 22), wherein each transparent support medium (12, 22) induces transverse chromatic aberration and coma in the rays of light transmitted thereby, characterized in that the beam splitter includes at least one further transparent plate (32), such that light transmitted by the beam splitter to respective linear charge coupled device arrays (11, 21, 31) has induced therein either (1) no coma and transverse chromatic aberration contributions, or (2) one or more coma and transverse chromatic aberration contributions of one polarity having respective total magnitudes and one or more coma and transverse chromatic aberration contributions of opposite polarity having the same respective total magnitudes.

2. A beam splitter as claimed in claim 1 wherein each transparent support medium (12, 22) also induces astigmatism in the rays of light transmitted thereby, the beam splitter further including a respective terminal astigmatism correcting lens (24, 35) in each transmitted light path, before the respective CCD array, for focussing a fully corrected line of light thereonto.

3. A beam splitter as claimed in claim 1 or 2 wherein there are two dichroic mirrors (10, 20), the mirrors (10, 20) being inclined at equal and opposite angles to the axis of the system, and one further transparent plate (32), light of a first colour being reflected from one dichroic mirror (10) and light of second and third colours being transmitted thereby, light of the second colour being reflected by the other dichroic mirror (20) and transmitted by the further transparent plate (32), and light of the third colour being transmitted by said other dichroic mirror (20) such that light of the first colour is not transmitted and has zero coma, tranverse chromatic aberration or astigmatism induced therein, light of the second colour has two equal and opposite amounts of coma and transverse chromatic aberration induced in its passage through the transparent support medium (12) of said one dichroic mirror (10) and through the transparent plate (32), and light of the third colour has two equal and opposite amounts of coma and transverse chromatic aberration induced therein on passage through the transparent support media (12, 22) of both of said dichroic mirrors (10, 20).

4. A beam splitter as claimed in claim 2 or claim 3 as appendant thereto wherein each terminal astigmatism correcting lens (24, 35) is in the form of a plano-convex cylindrical lens having its axis parallel to the length of the respective linear array of CCDs (11, 21, 31).

5. A beam splitter as claimed in any preceding claim wherein the transparent support media (12, 22) and the transparent plate (32) are arranged to be sufficiently thick that ghost images caused by internal reflection are imaged at a location remote from the sensitive surface of the charge coupled devices (11, 21, 31).

6. A beam splitter as claimed in any preceding claim wherein an infrared reflecting surface (33), for reflecting non-image-modified radiation transmitted by the original, is arranged on the transparent plate (32).

7. An image analysing device, incorporating a beam splitter as claimed in any preceding claim, comprising means for holding an original such as a photographic negative to be analysed, means for illuminating the original, slit means for passing light transmitted by a narrow width line of the original, and mechanical means for causing the slit to pass light transmitted by successive line portions of the original, the device including optical means for focussing an image of the narrow width line of the original onto the CCD arrays (11, 21, 31), and wherein the optical means has a working aperture of f4 or greater.

**Patentansprüche**

1. Optischer Strahlenteiler zur Analyse des Bildinhalts einer Vorlage der das von der Vorlage durchgelassene oder reflektierte Licht mittels dichroitischer Spiegel (10, 20), die auf transparenten Trägermedien (12, 22) angebracht sind, in drei Farben zerlegt, wobei jedes der transparenten Trägermedien (12, 22) in den so übertragenen Lichtstrahlen transversale chromatische Aberration und Koma bewirkt, dadurch gekennzeichnet, daß der Strahlenteiler mindestens eine weitere transparente Platte (32) aufweist, derart, daß von dem Strahlenteiler auf entsprechende zeilenförmige CCD-Anordnungen (11, 21, 31) übertragenes Licht in diesen entweder (1.) kein Koma und keine transversale chromatische Aberration bewirkt oder (2.) eine oder mehrere Abbildungen von Koma und transversaler chromatischer Aberration einer einzigen Polarität liefert, die eine entsprechende Gesamtgröße aufweisen, und eine oder mehrere Abbildungen von Koma und transversaler chromatischer Aberration mit entgegengesetzter Polarität liefert, welche die gleichen entsprechenden Gesamtgrößen aufweisen.

2. Strahlenteiler nach Anspruch 1, dadurch gekennzeichnet, daß jedes der transparenten Trägermedien (12, 22) in den von ihm durchgelassenen Lichtstrahlen außerdem Astigmatismus hervorruft und daß der Strahlenteiler außerdem in jedem Strahlengang vor der entsprechenden CCD-Anordnung eine Korrekturlinse (24, 35) für diesen Astigmatismus aufweist, um auf dieser Anordnung eine vollständig korrigierte Lichtzeile zu fokussieren.

3. Strahlenteiler nach Anspruch 1 oder 2, dadurch gekennzeichnet, daß zwei dichroitische Spiegel (10, 20), die unter gleich großen, einander entgegengesetzten Winkeln zur Achse des Systems geneigt sind, und eine weitere transparente Platte (32) vorgesehen sind, daß von dem einen dichroitischen Spiegel (10) Licht einer ersten Farbe reflektiert und Licht einer zweiten und dritten Farbe durchgelassenen wird, daß von dem anderen dichroitischen Spiegel (20) Licht der zweiten Farbe reflektiert und von der weiteren transparenten Platte (32) durchgelassen wird, daß Licht der dritten Farbe von dem anderen dichroitischen Spiegel (20) so durchgelassen wird, daß Licht der ersten Farbe nicht durchgelassen wird und in diesem Licht weder Koma noch transversale chromatische Aberration noch Astigmatismus hervorgerufen werden, daß in dem Licht der zweiten Farbe während seines Durchgangs durch das transparente Trägermedium (12) des einen dichroitischen Spiegels (10) und durch die transparente Platte (32) zwei gleiche und einander entgegengesetzte Abbildungen von Koma und transversaler chromatischer Aberration erzeugt werden und daß in dem Licht der dritten Farbe bei seinem Durchgang durch die transparenten Trägermedien (12, 22) der beiden dichroitischen Spiegel (10, 20) zwei gleiche und einander entgegengesetzte Abbildungen von Koma und transversaler chromatischer Aberration erzeugt werden.

4. Strahlenteiler nach Anspruch 2 oder 3, dadurch gekennzeichnet, daß jede der Korrekturlinsen (24, 35) gegen Astigmatismus als plankonvexe, zylindrische Linse ausgebildet ist, deren Achse parallel zur Länge der entsprechenden zeilenförmigen CCD-Anordnung (11, 21, 31) verläuft.

5. Strahlenteiler nach einem der vorhergehenden Ansprüche, dadurch gekennzeichnet, daß die transparenten Trägermedien (12, 22) und die transparente Platte (32) in einer solchen Dicke vorgesehen sind, daß durch innere Reflexion verursachte Reflexbilder an einer von der empfindlichen Oberfläche der zeilenförmigen CCD-Anordnungen (11, 21, 31) entfernten Stelle abgebildet werden.

6. Strahlenteiler nach einem der vorhergehenden Ansprüch, dadurch gekennzeichnet, daß eine Infrarotlicht reflektierende Oberfläche (33) zum Reflektieren von nicht bildmäßig modifizierter Strahlung, die von der Vorlage durchgelassen wird, auf der transparenten Platte (32) angeordnet ist.

7. Ein einen Strahlenteiler nach einem der vorhergehenden Ansprüche enthaltendes Bildanalysegerät mit Mitteln zur Halterung einer Vorlage, wie eines zu analysierenden fotografischen Negativs, mit Mitteln zum Beleuchten der Vorlage, mit Lichtspaltmitteln, die durch eine schmale Vorlagenzeile übertragenes Licht durchlassen, und mit mechanischen Mitteln, die bewirken, daß von aufeinanderfolgenden Zeilenabschnitten der Vorlage durchgelassenes Licht durch die Lichtspaltmittel fällt, sowie mit optischen Mitteln, mittels derer ein Bild der schmalen Vorlagenzeile auf die CCD-Anordnungen (11, 21, 31) fokussierbar ist und die eine Arbeitsblende von f/4 oder größer enthalten.

**Revendications**

1. Diviseur de faisceau optique utilisable dans l'analyse d'une image d'un original en ses trois composantes trichromes par division du faisceau transmis ou réfléchi par cet original au moyen de miroirs dichroïques (10, 20) fixés respectivement sur un support transparent (12, 22) dans lequel chaque support transparent (12, 22) introduit des aberrations chromatiques transverses et de coma dans le faisceau transmis, diviseur caractérisé en ce qu'il comprend au moins une plaque transparente (32) supplémentaire, de manière que la lumière transmise par le diviseur de faisceau vers les dispositifs à couplage de charge (11, 21, 31) linéaires entraîne 1) soit ni coma ni aberration chromatique transverse, 2) soit au moins une première contribution aux aberrations de coma de chromatisme transverse de signe donné et présentant une amplitude respective totale donnée et au moins une deuxième contribution aux aberrations de coma ou de chromatisme transverse de signe opposé au signe de la première contribution et d'amplitude respective égale à ladite première amplitude totale respective.

2. Diviseur de faisceau conforme à la revendication 1, dans lequel chacun des supports transparents (12, 22) produisent de l'astigmatisme dans le faisceau transmis, et caractérisé en ce qu'il comprend une lentille correctrice astigmatique (24, 35) disposé sur la trajectoire des faisceaux transmis, avant les ensembles CCD d'analyse, pour former sur ces derniers une ligne totalement corrigée des aberrations optiques.

3. Diviseur conforme à l'une quelconque des revendications 1 ou 2, comprenant deux miroirs dichroïques (10, 20) qui sont inclinés par rapport à l'axe optique du système avec des angles égaux et opposés, et une plaque transparente supplémentaire (32), et dans lequel la première composante spectrale est réfléchie par le premier miroir dichroïque tandis que les seconde et troisième composantes spectrales sont transmises par ce premier miroir, la seconde composante spectrale est réfléchie par le second miroir dichroïque (20) puis transmis par la plaque transparente supplémentaire (32), et la troisième composante est transmise par le second miroir dichroïque (20) de manière que la première composante ne traverse aucun support et ne contient pas de coma, d'aberration chromatique transverse ou d'astigmatisme, la seconde composante, qui a traversé le support transparent (12) du premier miroir dichroïque (10) et la plaque transparente 32, contient deux quantités identiques et opposées représentant les aberrations de coma et de chromatisme transverse, et la troisième composante qui a traversé les supports transparents (12, 22) des deux miroirs dichroïques contient deux quantités identiques et opposées représentant les aberrations de coma et de chromatisme transverse.

4. Diviseur conforme à la revendication 2 ou à la revendication 3 lorsqu'elle dépend de la revendication 2, dans lequel chaque lentille correctrice astigmatique (24, 35) est une lentille cylindrique plan convexe dont l'axe est parallèle à la direction des ensembles CCD linéaires (11, 21, 31).

5. Diviseur conforme à l'une quelconque des revendications 1 à 4, dans lequel les supports transparents (12, 22) et la plaque transparente (32) sont suffisament épais pour que les images fantômes provenant des réflexions multiples internes soient situées en des positions éloignées de la surface sensible des ensembles CCD linéaires (11, 21, 31).

6. Diviseur conforme à l'une quelconque des revendications 1 à 5, dans lequel la plaque transparente (32) comprend une surface (33) réfléchissant le rayonnement infrarouge afin de réfléchir ledit rayonnement transmis par l'original.

7. Dispositif d'analyse d'image muni d'un diviseur de faisceau conforme à l'une quelconque des revendications 1 à 6, comprenant des moyens de préhension pour maintenir un original à analyser tel qu'une image photographique négative, des moyens pour irradier l'original, une fente pour ne transmettre de l'original que la lumière issue d'une ligne lumineuse étroite et des agencements méchaniques pour que la fente ne laisse passer que la lumière transmise par des portions successives de la ligne lumineuse de l'original, dispositif comprenant une optique pour focaliser une image de la ligne étroite lumineuse sur les ensembles CCD linéaires d'analyse (11, 21, 31) et caractérisé en ce que ladite optique présente une ouverture numérique supérieure ou égale à f/4.

FIG.1.

FIG.2.

12

MAIN
IMAGE

GHOST
IMAGE

# FIG.3.